# EUROPÄISCHE PATENTANMELDUNG

(11) **EP 0 825 107 A2**
(43) Veröffentlichungstag der Anmeldung: **25.02.1998**
(21) Anmeldenummer: 97108192.2
(22) Anmeldetag: 21.05.1997
(51) Int. Cl.: B64D 11/00

(54) **Vorrichtung zum Halten von Ausrüstungsteilen im oberen Bereich von Passagierkabinen, insbesondere von Gepäckablagen in Flugzeugpassagierkabinen**

(30) Priorität: 20.08.1996 DE 19633469
(71) Anmelder: Daimler-Benz Aerospace Airbus Gesellschaft mit beschränkter Haftung, 21129 Hamburg (DE)
(72) Erfinder: Terwesten, Ulrich, Dipl.-Ing., 22765 Hamburg (DE)
(74) Vertreter: Hansmann, Dierk, Dipl.-Ing.

(57) **Zusammenfassung**

Bei einer Vorrichtung zum Halten von Ausrüstungsteilen im oberen Bereich von Passagierkabinen, insbesondere von Gepäckablagen (4,5) in Flugzeugpassagierkabinen (1), die mit Befestigungsmitteln an der Rumpfstruktur (3) befestigt sind, besteht die Erfindung darin, daß Haltemittel (18,19,22,23) vorgesehen sind, die mit der Rumpfstruktur (3) und den Ausrüstungsteilen (4,5,6,7) verbunden sind und eine solche Wirkverbindung bilden, daß sie im Normalbelastungszustand nicht belastet sind und im Extrembelastungszustand nach Versagen wenigstens eines Befestigungselementes (8a-c,9a-c,10,11) die Ausrüstungsteile in der vorgegebenen Position halten.

Dabei ist von Vorteil, daß Ausrüstungsteile (4,5,6,7) innerhalb der Passagierkabine (1) wie Gepäckablagen (4,5) bzw. Teile von Gepäckablagen insbesondere bei Extrembelastungen nicht herunterfallen. Für die Menschen an Bord eines Flugzeuges ist mit kostengünstigen und unaufwendigen Mitteln eine Minimierung des Restrisikos und damit ein Höchstmaß an Sicherheit und ein wirksamer Schutz vor schweren Verletzungen durch herunterfallende Ausrüstungsteile realisiert.

## Beschreibung

Die Erfindung betrifft eine Vorrichtung zum Halten von Ausrüstungsteilen im oberen Bereich von Passagierkabinen, insbesondere von Gepäckablagen in Flugzeugpassagierkabinen, die mit Befestigungsmitteln an der Rumpfstruktur befestigt sind.

Gepäckablagen in Verkehrsflugzeugen werden üblicherweise mittels festen Verbindungen, beispielsweise Beschläge, Bolzen, Stangen an der Rumpfstruktur des Flugzeuges befestigt. Befestigungsstellen an der Rumpfstruktur sind Spante, Stringer oder die Rumpfhaut. Die Befestigung genügt dabei den einschlägigen Sicherheitsvorschriften, insbesondere für Extrembelastungen, die während sogenannter "emergency landing conditions" auftreten. Damit wird sichergestellt, daß auch unter den Extrembelastungen die Gepäckablagen an ihrem vorgesehenen Ort verbleiben und eine Verletzungsgefahr für Passagiere durch herunterfallende Gepäckstücke oder Gepäckablagenteile minimiert und so den Passagieren ein Höchstmaß an Sicherheit geboten wird. Es verbleibt jedoch ein Restrisiko, da unter den extremen Umständen einer Notlandung die Belastungen höher sein können, als in den Vorschriften angegeben. In solchen Fällen ist ein Herunterfallen der Gepäckablagen und damit eine Verletzungsgefahr für die Passagiere nicht vollständig auszuschließen. Eine Auslegung der herkömmlichen Befestigungsmittel für höhere Belastungen würde einen erheblichen Konstruktions- und Änderungsaufwand bedeuten und auch nur mit einem höheren Gewicht der Befestigungmittel sowie der angeschlossenen Struktur zu realisieren sein.

Demgemäß liegt der Erfindung die Aufgabe zugrunde, eine gattungsgemäße Vorrichtung so auszubilden, daß Ausrüstungsteile innerhalb der Passagierkabine wie Gepäckablagen bzw. Teile von Gepäckablagen insbesondere bei Extrembelastungen nicht herunterfallen. Für die Menschen an Bord eines Flugzeuges ist mit kostengünstigen und unaufwendigen Mitteln eine Minimierung des Restrisikos und damit ein Höchstmaß an Sicherheit und ein wirksamer Schutz vor schweren Verletzungen durch herunterfallende Ausrüstungsteile zu realisieren.

Diese Aufgabe wird mit den in Patentanspruch 1 angegebenen Maßnahmen gelöst.

Weiterbildungen und zweckmäßige Ausgestaltungen ergeben sich aus den Unteransprüchen 2 - 8.

Die Erfindung wird nachstehend beschrieben, wobei die Ausbildung der Vorrichtung anhand des in der Zeichnung dargestellten Ausführungsbeispiels näher erläutert ist. In den Figuren sind gleiche Bauteile mit gleichen Bezugszeichen versehen.

Die Zeichnung zeigt
- in Fig. 1: ein Querschnitt einer Passagierkabine eines Flugzeuges in der im oberen Bereich Gepäckablagen angeordnet sind und
- in Fig. 2: eine Darstellung einer an der Rumpfstruktur eines Flugzeuges im seitlichen Bereich angeordneten Gepäckablage.

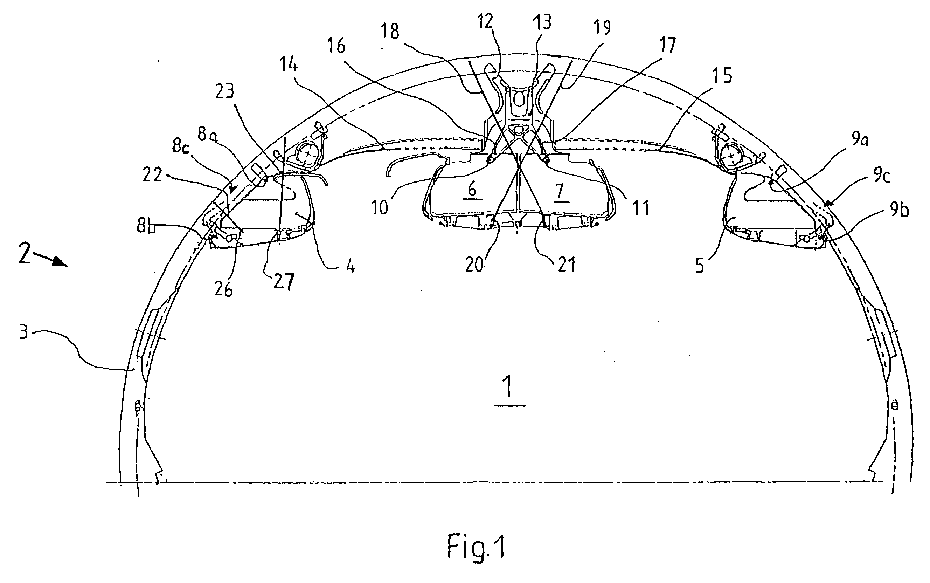

In Fig. 1 ist eine Passagierkabine 1 eines Flugzeuges 2 im Querschnitt dargestellt. Die Passagierkabine 1 ist im Oberdeck des Flugzeuges 2 angeordnet. Verkleidungen und Ausrüstungsteile, die zur Ausstattung der Passagierkabine gehören, sind am Flugzeug 2 unter anderem an der oberen Rumpfschale 3 befestigt. Seitliche Gepäckablagen 4, 5 und mittlere Gepäckablagen 6, 7 sind innerhalb der Passagierkabine 1 im Bereich oberhalb von Passagieren bzw. Passagiersitzen angeordnet. Die Gepäckablagen 4, 5, 6, 7 sind mittels Befestigungselementen mit der Rumpfstruktur verbunden. Befestigungselemente können unter anderem Beschläge, Bolzen oder Stangen sein, die eine starre Verbindung zwischen Rumpfstruktur und Gepäckablage realisieren. Die seitlichen Gepäckablagen 4 bzw. 5 sind an jeweils drei Anschlußpunkten 8a, 8b, 8c bzw. 9a, 9b, 9c an der Rumpfstruktur 3 befestigt. Die Anschlußpunkte 8a und 9a stellen mit Beschlägen und Bolzen eine Verbindung zwischen Spant und Gepäckablage her und sichern die Gepäckablage 4 bzw. 5 vornehmlich in senkrechter Richtung. Die Anschlußpunkte 8b und 9b stellen mit Beschlägen, Stangen und Bolzen eine Verbindung zwischen Spant und Gepäckablage 4 bzw. 5 her und sichern die Gepäckablage 4 bzw. 5 vornehmlich in waagerechter Richtung. Die Anschlußpunkte 8c und 9c stellen mit Beschlägen, Stangen und Bolzen eine Verbindung zwischen Stringer, Rumpfhaut und der Gepäckablage 4 bzw. 5 her und sichern die Gepäckablage 4 bzw. 5 in Flugzeuglängsrichtung. Die mittleren Gepäckablagen 6 und 7 sind im Mittelbereich an der Rumpfoberschale 3 entlang der Flugzeuglängsachse angeordnet. An einem Spant in diesem Bereich ist vorzugsweise eine Y-Strebe 12 befestigt, die unter anderem zum Halten von Deckenverkleidungsteilen 14, 15 genutzt wird. Ein Beschlag 13, der die Verbindung zu den mittleren Gepäckablagen 6 und 7 herstellt, ist an der Y-Strebe 12 ebenfalls angeordnet. Der Beschlag 13 weist nach unten gerichtete Haltearme 16, 17 auf, an denen jeweils an Anschlußpunkten 10 oder 11 eine mittlere Gepäckablage 6 oder 7 hängt. Darüber hinaus werden die mittleren Gepäckablagen 6 und 7 durch Beschläge, Stangen und Bolzen an Stringern und Rumpfhaut im oberen Bereich der Rumpfstruktur 3 befestigt und so in Flugzeuglängsrichtung gesichert.
Die Befestigung der Gepäckablagen 4, 5, 6 und 7 an der Rumpfstruktur ist so ausgelegt, daß unter anderem auch bei in den Sicherheitsvorschriften vorgegebenen Extrembelastungen die Gepäckablagen 4, 5, 6 und 7 an ihrem vorgesehenen Ort verbleiben. Es verbleibt jedoch ein Restrisiko, da unter extremen Bedingungen auch Belastungen auftreten können, die größer sind als in den Vorschriften angegeben. Zur Minimierung dieses Restrisikos werden die Gepäckablagen 4, 5, 6 und 7 erfindungsgemäß durch zusätzliche Haltemittel gesichert. Die Haltemittel 18 und 19 dienen zur Sicherung der mittleren Gepäckablagen 6 und 7 und die Haltemittel 22 und 23 sind zur Sicherung der seitlichen Gepäckablage 4 vorgesehen, wie in Fig. 1 ersichtlich. Haltemittel für die seitliche Gepäckablage 5 sind nicht gezeigt, entsprechen aber der an der Gepäckablage 4 vorgesehenen Anordnung.
Erfindungsgemäß sind die Haltemittel als Sicherheitsseile, Sicherheitsbänder oder Sicherheitsgurte ausgebildet, die einerseits mit der Rumpfstruktur 3 und andererseits mit den Gepäckablagen 4, 5, 6 und 7 verbunden sind. Die Seile, Bänder oder Gurte sind in der bevorzugten Ausgestaltung aus Kunstoffmaterialien, beispielsweise Polyamid gefertigt. Die Kunststoffmaterialien bieten sich wegen des Gewichtsvorteils und der Möglichkeit der Energieaufnahme durch große plastische Verformungen an, wobei sie so auszuwählen sind, daß die Brandschutzvorschriften für Flugzeuginnenräume eingehalten werden.
Es ist vorgesehen, daß die Haltemittel im Normalbelastungszustand nicht belastet sind und erst bei Auftreten einer Extrembelastung, die zum Bruch der regulären Befestigungselemente und damit zum Herunterfallen der Gepäckablage 4, 5, 6 und 7 führen würde, die Haltemittel wirken.

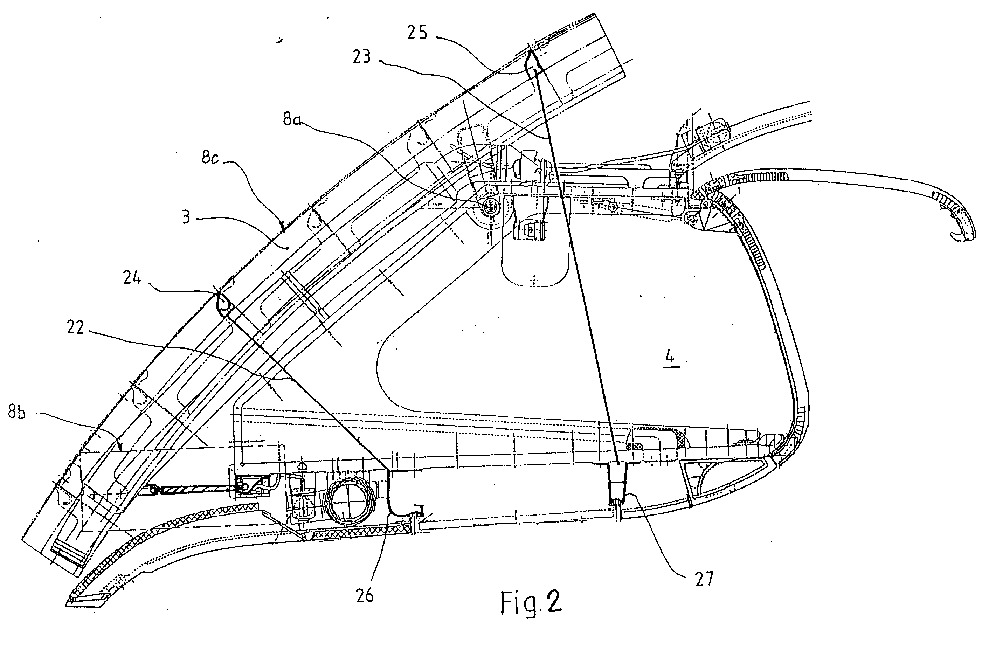

In Fig. 1 sind die Sicherheitsseile 18 und 19 ersichtlich, wobei jeweils ein Seil 18 oder 19 für eine mittlere Gepäckablage 6 oder 7 vorgesehen ist. Zur Fixierung der Seile 18, 19 ist vorzugsweise eine gekreuzte Anordnung der Seile vorzusehen. Eine Verwendung von mehreren Seilen je Gepäckablage ist ebenfalls möglich, wie die Sicherheitsseile 22 und 23 für die seitliche Gepäckablage 4 zeigen. Diese Ausführung ist als Einzelheit in Fig. 2 gezeigt, welche im Anschluß an die Beschreibung der Fig. 1 näher erläutert wird.
Das Sicherheitsseil 18 bzw. 19 ist als ein die Gepäckablage 6 bzw. 7 umschlingender Seilring ausgebildet. Als Befestigung an der Rumpfstruktur 3 sind vorteilhaft vorhandene Aussparungen bzw. Ausnehmungen an den Spanten oder vorhandene Öffnungen der Rumpfstrukturteile zu nutzen. Somit ist es möglich, daß die Haltemittel als Sicherheitseinrichtung ohne weitreichende Änderungen der bestehenden Konstruktion auch nachträglich in eine Passagierkabine eingebracht werden können, wobei das zusätzliche Gewicht dieser Sicherheitseinrichtung nur minimal ist. Die Sicherheitsseile 18 und 19 können mit üblichen Verbindungselementen, wie Schlaufen und Karabinerhaken versehen sein. Damit kann ein um die Gepäckablage geführter Seilring realisiert werden oder direkt das Sicherheitsseil an den Seitenwänden der Gepäckablage befestigt werden. Bei der in Fig. 1 gezeigten Lösung ist für die mittleren Gepäckablagen 6 und 7 ein entsprechender Seilring 18, 19 je Gepäckablage mit der Rumpfstruktur 3 verbunden und unterhalb der Gepäckablage 6 und 7 entlang vorhandener Längsprofile 20 und 21 so verlegt, daß eine Fixierung des Seilringes 18 oder 19 unterhalb der Gepäckablage 6 oder 7 erfolgt. Diese zusätzliche Sicherung der Gepäckablagen 6 und 7 ist im Falle der Normalbelastung nicht aktiv. Erst wenn beispielsweise im Falle eines Crashs die Befestigungselemente nicht halten und die Gepäckablage 6 bzw. 7 herunterfallen würde, fängt der Seilring 18 bzw. 19 das Teil ab. Die Haltemittel müssen dafür in der Lage sein, durch bleibende Verformung Energie aufzunehmen und so die Spitzenlasten zu reduzieren. Ebenso ist das Risiko des Versagens der Flugzeugstruktur an den Befestigungsstellen der Haltemittel infolge der elastischen Krafteinleitung verringert.

In Fig. 2 ist eine seitliche Gepäckablage 4 als Einzelheit gezeigt. Die Gepäckablage 4 ist am Anschlußpunkt 8a mittels einer Beschlag-Bolzen-Verbindung und an den Anschlußpunkten 8b, 8c mittels einer Beschlag-Bolzen-Stangen-Verbindung an der Rumpfoberschale 3 befestigt.
Weiterhin sind Haltemittel 22, 23 vorgesehen, die eine weitere Verbindung zwischen Rumpfoberschale 3 und Gepäckablage 4 schafft. Die Gepäckablage 4 ist mit den Haltemitteln 22, 23 an der Rumpfoberschale 3 befestigt, wobei vorhandene Öffnungen 24, 25 zwischen Rumpfhaut, Spant und Clip ausgenutzt werden. Die Haltemittel 22 und 23 sind in dieser Ausgestaltung jeweils als ein Seilring ausgebildet und verlaufen unterhalb des Bodens der Gepäckablage entlang von Halteschienen 26, 27, die für die unterhalb der Gepäckablage 4 angeordneten Passagierversorgungseinheiten (sogenannten PSU's) vorgesehen sind. Die Seilringe 22 und 23 bzw. Sicherheitsseile anderer Art können auch unter Ausnutzung vorhandener Öffnungen und Fixierpunkte der Flugzeugstruktur in einer anderen Weise um die Gepäckablage geführt werden. Wesentlich ist, daß eine Vorrichtung zum Halten realisiert ist, die im Normalbelastungszustand nicht aktiv ist und erst bei Abreißen der üblichen Befestigungsmittel wirkt.

## Patentansprüche

1. Vorrichtung zum Halten von Ausrüstungsteilen im oberen Bereich von Passagierkabinen, insbesondere von Gepäckablagen in Flugzeugpassagierkabinen, die mit Befestigungselementen an der Rumpfstruktur befestigt sind, **dadurch gekennzeichnet, daß** Haltemittel (18, 19, 22, 23) vorgesehen sind, die mit der Rumpfstruktur (3) und den Ausrüstungsteilen (4, 5, 6, 7) verbunden sind und eine solche Wirkverbindung bilden, daß sie im Normalbelastungszustand nicht belastet sind und im Extrembelastungszustand nach Versagen wenigstens eines Befestigungselementes (8a, 8b, 8c; 9a, 9b, 9c; 10, 11) die Ausrüstungsteile (4, 5, 6, 7) in der vorgegebenen Position halten.

2. Vorrichtung nach Anspruch 1,
**dadurch gekennzeichnet, daß**
die Haltemittel (18, 19, 22, 23) als Sicherheitsseile, -bänder oder -gurte ausgebildet sind.

3. Vorrichtung nach einem der Ansprüche 1 oder 2,
**dadurch gekennzeichnet, daß**
die Haltemittel (18, 19, 22, 23) mit Verbindungselementen, wie Schlaufen und Karabinerhaken versehen sind.

4. Vorrichtung nach einem der Ansprüche 1 bis 3,
**dadurch gekennzeichnet, daß**
die Haltemittel (18, 19, 22, 23) zumindest einen die Gepäckablage umschlingenden Seilring bilden und entlang (vorhandener) Längsprofile (20, 21, 26, 27) unterhalb der Gepäckablage (4, 5, 6, 7) führbar sind.

5. Vorrichtung nach einem der Ansprüche 1 bis 3,
**dadurch gekennzeichnet, daß**
die Haltemittel (18, 19, 22, 23) an den Seitenteilen der Gepäckablage befestigbar sind.

6. Vorrichtung nach einem der Ansprüche 1 bis 5,
**dadurch gekennzeichnet, daß**
die Haltemittel (18, 19, 22, 23) an Ausnehmungen bzw. Öffnungen (24, 25) in Strukturteilen befestigbar sind.

7. Vorrichtung nach einem der Ansprüche 1 bis 6,
**dadurch gekennzeichnet, daß**
die Haltemittel (18, 19) an den an Strukturteilen vorhandenen Befestigungselementen (12) für Verkleidungen (14, 15) oder Ausrüstungen befestigbar sind.

8. Vorrichtung nach einem der Ansprüche 1 bis 7,
**dadurch gekennzeichnet, daß**
die Haltemittel (18, 19) mit zusätzlichen Befestigungselementen an der Rumpfstruktur (3) befestigbar sind.
